Europäisches Patentamt

European Patent Office

Office européen des brevets

(19)

(11) EP 1 193 617 A1

(12) EUROPEAN PATENT APPLICATION
published in accordance with Art. 158(3) EPC

(43) Date of publication:
03.04.2002 Bulletin 2002/14

(51) Int Cl.7: G06F 17/30, G06F 15/00,
G06F 17/60, G06F 13/00

(21) Application number: 00931552.4

(22) Date of filing: 25.05.2000

(86) International application number:
PCT/JP00/03348

(87) International publication number:
WO 00/72194 (30.11.2000 Gazette 2000/48)

(84) Designated Contracting States:
AT BE CH CY DE DK ES FI FR GB GR IE IT LI LU
MC NL PT SE

(30) Priority: 25.05.1999 JP 14425199
16.02.2000 JP 2000037895
24.05.2000 JP 2000153553

(71) Applicant: 104.Com Co., Ltd.
Bunkyo-ku, Tokyo 113-0033 (JP)

(72) Inventors:
• MIZUNO, Yoshiro
Tokyo 113-0034 (JP)
• KATO, Keiichi
Miyamae Kawasaki Kanagawa 216-0035 (JP)

(74) Representative: Grünecker, Kinkeldey,
Stockmair & Schwanhäusser Anwaltssozietät
Maximilianstrasse 58
80538 München (DE)

(54) INFORMATION PROVIDING AND DISPLAYING SYSTEM

(57) A system by which information on sites existing in the Internet is used safely with an easy operation. The system includes a browser to display a homepage of a site on the Internet, a button to obtain information pasted on the homepage, a portable browser terminal, a personal database in which obtained information and personal information are stored, a telephone company server, and a system operating server, allowing the user to obtain information according to the user's action on the button and use the information.

FIG. 1

EP 1 193 617 A1

**Description**

Technical Field

The present invention relates to a system for acquiring information using a browser terminal which is connectable to the Internet and providing the acquired information. The present invention also relates to a method for using personal information database storing information which has been acquired through the Internet.

Background Art

As a conventional technique, there is a telephone directory which can be realized using the Internet. For example, in an EZWeb service provided by IDO and DDI, users can manage his/her own telephone list, in a Web site, which can be accessed through CDMA-One. In the service, the telephone list can be viewed, updated and registered from a computer connected to the Internet or from a cellular phone, etc. This service is prepared for accessing a particular Web site and editing the telephone list of the user by him/herself, in accordance with a CGI program. However, there is no technique for directly registering information, such as phone numbers shown in Web sites of various corporations, restaurants, etc.

Since only data in a particular Web site needs to be edited, there is no technique for retrieving various data of any other general Web sites into the user's database with an easy operation. In the case where such information of the general Web sites are required, some troublesome operations must be performed by the user. The user selects a desired portion of data, copies the selected portion, opens a program which can read the copied information, and reads the information. Further, the user updates the read information, and stores the updated information in the database of his/her own personal Web site.

It is demanded that the personal database is used, not only for simply registering information for communicating with others using the telephone list, etc., but also presetting recording of a desired TV program, making a reservation of events, purchasing products or paying for services based on catalogue information, and sending requests for savings, in accordance with ease operations. However, there is no system which meets the above demand, by simple processes.

Such personal information may possibly be leaked out. Hence, problems when acquiring information through a general Web site may occur. There is no such a technique for managing the above-described information safely in a personal database, in accordance with easy operations.

As described above, such a system is highly demanded that can store, in personal databases in accordance with easy operations; not only the information necessary for communicating with others, such as the telephone list, etc.; but also any other various information, which include schedule information including events and TV programs, catalogue information for products or services, financial information regarding the balance of users savings. Further, a system with reliable security and which provides information that both users and Web site managers can trust is demanded.

It is accordingly an object of the present invention to provided a system which can realize a process for acquiring Web site information which exists on the Internet and displaying the acquired information using the terminal machine of the user's, through reliable and easy operations.

Disclosure of Invention

To fulfill the aforementioned aim of providing a reliable and comfortable operation, the present inventors took the following measures as the results of devoted studies.

A system which allows a user to acquire information provided by an information providing site present on a network by a user terminal employs an information providing and displaying system characterized by including, as structural elements, 1) a personal database which stores personal information prepared user by user, 2) an information acquisition button which is simultaneously displayed on a screen of the user terminal showing contents of the information providing site, stores the provided information in the button itself and transfers the provided information that has been matched with a data definition of the personal database in advance to the personal database when the user adds an action, and 3) display means that provides and displays a view screen in which information stored in the personal database is inserted to and on the user terminal, in response to a call from the user.

It is preferable that the provided information should include at least one contact information selected from a name, a company name, a shop name, an address, a telephone number, a pager number, a mail address, a mail address and the URL of the information providing site. Further, it becomes a very useful tool if an action is added to the contact information displayed on the user terminal to be thereby linked with at least one contact operation selected from the activation of e-mail software, telephone calling and the activation of a browser.

The provided information may include at least one catalog information selected from a size, specifications, a price, the date of delivery, cooking recipe, a list of ingredients, rental/sales immovables data, a valid period and the date of sale. In this case, on-line shopping becomes very easy to do if an action is added to the catalog information displayed on the user terminal to be thereby linked with at least one purchase operation selected from the activation of electronic commerce software and the activation of order generating software.

The provided information may include at least one schedule information selected from a schedule of sports games, a schedule of TV programs, a concert schedule, a restaurant reservation status, a transportation-facilities reservation status and booking information on accommodations. In this case, it is possible to provide a user with a useful reservation system if the schedule information is linked with the reservation system of the information providing site and reservation data on a reservation that has been verified is registered in a predetermined portion in the personal database.

The provided information may include at least one traffic information selected from traffic route information, a transfer guide, fare information on transportation facilities and time information on transportation facilities. In this case, a user can be saved of a trouble of entering his own schedule if the traffic information is linked with the reservation system of the information providing site and reservation data on a reservation that has been verified is registered in a predetermined portion in the personal database.

The provided information may include at least one financial information selected from a saving and deposit balance, an investment balance, a closing date, company information and company stock information. In this case, it is more preferable that the financial information should be linked with a mobile financial system associated with the information providing site.

It is desirable that the data definition of the personal database should be a database definition of at least one format selected from an address book format, a telephone book format and a schedule book format in accordance with the user's usage.

If the provided information includes an identifier associated with time, it is possible to build the personal database in a format of a time-based arrangement using the time-associated identifier. In this case, it is preferable that the view screen should be a screen of a schedule book format provided by separating the view screen according to time zones and the time-associated identifier should be identified so that the provided information is inserted in the proper time zone in the schedule.

If the provided information includes an identifier associated with a person, it is possible to build the personal database in a format of a person-based arrangement using the person-associated identifier. In this case, it is more preferable that the view screen should be a screen separated person by person and the person-associated identifier should be identified so that the provided information is inserted at the proper position on the view screen.

If the provided information includes an identifier associated with a place, it is possible to build the personal database in a format of an area-based arrangement using the place-associated identifier. It is desirable that the place-associated identifier should be at least one selected from an address, a telephone number, a FAX number, a zip code, a latitude and longitude and a URL, and it is more preferable that the view screen should be at least one screen selected from screens separated area by area and the place-associated identifier should be identified so that the provided information is inserted at the proper position on the view screen.

It is desirable that the button should be described in a markup language and issue means for issuing the button to the information providing site should be included in the system of the invention. Alternatively, issue means for issuing a button generating program to the information providing site may be included.

It is desirable that the button generating program should include embedding means which generates provided information matched with the data definition of the personal database upon reception of information to be provided to a user by the information providing site and embeds the provided information in the button.

It is desirable to provide an authentication site which authenticates a button, issue an information-providing-site identifier which identifies the information providing site or a button identifier which identifies the button itself and embed the identifier in the button. The identifier is more secure if it is encrypted. Further, it is effective to encrypt provided information in order to prevent falsification of provided information. It is more preferable that the encryption should be at least one selected from a public key system and a private key system. Further, it is possible to acquire effective marketing information if the state of the usage of the button is counted.

It is preferable that edition means which executes at least one selected from preparation of personal information to be stored in the personal database by a user himself and processing the provided information should be included as a structural element. It is more preferable that when provided information is acquired newly, a formatted mail should automatically be sent to an address associated with the schedule.

It is desirable that the user terminal should be a portable browser terminal. In transferring provided information to a personal database, the user should be specified through individual authentication performed based on the specific ID or cookie of the user terminal, or both and the transfer to the personal database of the user should be performed. It may be a personal computer. In this case, the user is specified through individual authentication performed based on the specific ID or cookie of the user's personal computer, or both and the transfer to the personal database of the user is performed.

The network on which an information site is present should be at least one network selected from the Internet, an intranet and an extra-net, and connection to the network should be made by using at least one communication network selected from a public circuit, a portable circuit, an intraoffice circuit and an ISDN circuit.

The operation is easy if an action to the button is at least one selected from a click operation, a speech, the manipulation of a jog dial and a keyboard operation.

A system which allows a user to acquire information present on a network by a user terminal may employ an information providing and displaying system characterized by including, as structural elements, 1) a personal database which stores personal information of users, 2) retrieval and display means which appends an acquisition button to information retrieved using a retrieval condition previously set by a user as a key and displays the acquisition button on the user terminal, 3) information acquisition means which transfers the information appended with the button to the personal database when an action is added the acquisition button, and 4) viewing means which generates a view screen and displays acquired information stored in the personal database on the user terminal, in response with a call from the user.

In displaying retrieved information or in the view screen of acquired information transferred to the personal database, it is efficient to arrange and display information based on at least one selected from the time, place and person.

In this case too, it is desirable that the button should be described in a markup language and issue means for issuing the button to the information providing site should be included in the system of the invention. Alternatively, issue means for issuing a button generating program to the information providing site may be included. It is desirable that the button generating program should include embedding means which generates provided information matched with the data definition of the personal database upon reception of information to be provided to a user by the information providing site and embeds the provided information in the button.

It is desirable to provide an authentication site which authenticates a button, issue an information-providing-site identifier which identifies the information providing site or a button identifier which identifies the button itself and embed the identifier in the button. The identifier is more secure if it is encrypted. Further, it is effective to encrypt provided information in order to prevent falsification of provided information. It is more preferable that the encryption should be at least one selected from a public key system and a private key system. Further, it is possible to acquire effective marketing information if the state of the usage of the button is counted.

It is preferable that edition means which executes at least one selected from preparation of personal information to be stored in the personal database by a user himself and processing the provided information should be included as a structural element. It is desirable that the user terminal should be a portable information terminal. In the aforementioned retrieval of information, it is efficient if information retrieval is carried out using the retrieval condition stored in the personal database specified by performing individual authentication based on the specific ID or cookie of the user terminal, or both, because a trouble of making inputs can be eliminated in the case of a retrieval which is a cooperative work. In viewing information, it is preferable to perform individual authentication using the specific ID of the user terminal, specify the personal database of the user and display information stored in the personal database of the user.

The user terminal may be a personal computer. In this case, in the transfer of provided information to the personal database, the user is specified through individual authentication performed based on the specific ID or cookie of the user's personal computer, or both and the transfer to the personal database of the user is performed.

The above-described system is also desirable in which information present on the network is weather information and accesses a geo-server, which manages the information, to retrieve the information.

A system which allows a user to share personal information present in his own personal database with another user may employ a system characterized by including, as structural means, 1) a personal database which stores personal information to be managed by a system managing site, 2) issuing means which, when an action is added by a request of the user, issues the user with an information share button for setting a terminal on which the action has occurred, as a share user with respect to the personal database of the user, and comprising a) a step of appending the information share button to a mail and sending the mail to the user, b) a step of displaying the mail and adding an action to the appended button on the terminal of that another user, c) a step of registering the terminal on which the action has been added to the information share button as a share user for the personal database, and d) a step of generating a view screen in real time in response to a call from another user and displaying share information stored in the personal database on the terminal of that another user.

The system is so designed as to be able to make setting of whether part or all of personal information should be shared with another user on the user terminal of the owner of the personal information. It is efficient to embed a user identifier necessary for share setting in the button as that can eliminate a troublesome work of inputting the identifier.

It is desirable from the viewpoint of guaranteeing the security that the share button should have a valid period set so that the share setting capability is lost when a predetermined time passes, or that the specific ID of another user terminal is used as the identifier of the share user. It is preferable that the another user terminal should be a portable browser terminal.

A system which allows a user to acquire at least one geographic information selected from a map, a route, a traffic guide and traffic jam information from a site present on a network by a user terminal may employ an information providing and displaying system characterized by including, as structural elements, 1) a personal database which stores personal information prepared user by user, 2) an information acquisition button which is displayed on a screen of the user terminal, transfers identification information about at least one location selected from an address, a telephone number, a zip code, latitude and longitude data and a land mark name, associated with contents of an information providing site that is viewed by the user, when the user adds an action, and stores the identification information in the button itself, and 3) display means which generates the geographic information using the location-associated identification information and provides and displays it to and on the user terminal in response to a call from the user. At this time, it is desirable that the button should be described in a markup language.

It is efficient if the user terminal has position detecting means and the position of the user terminal when the action was taken is used in the generation of the geographic information because that eliminates the need for the user to enter his current location himself.

It is preferable that issue means for issuing the button to the information providing site should be included. Alternatively, issue means for issuing a button generating program to the information providing site may be included. In this case, it is desirable that the button generating program should include embedding means which generates provided information matched with the data definition of the personal database upon reception of information to be provided to the user by the information providing site and embeds the provided information in the button.

It is desirable to provide an authentication site which authenticates a button, issue an identifier which identifies the button itself or an information-providing-site identifier which identifies the issuing site and embed the identifier in the button. It is further desirable from the viewpoint of security to encrypt the identifier. At this time, it is possible to provide effective marketing data if the state of the usage of the button is counted.

Brief Description of Drawings

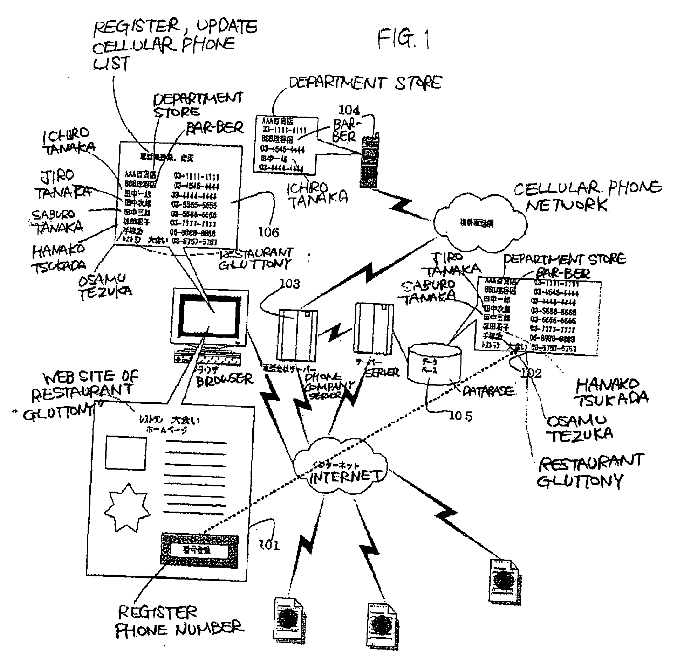

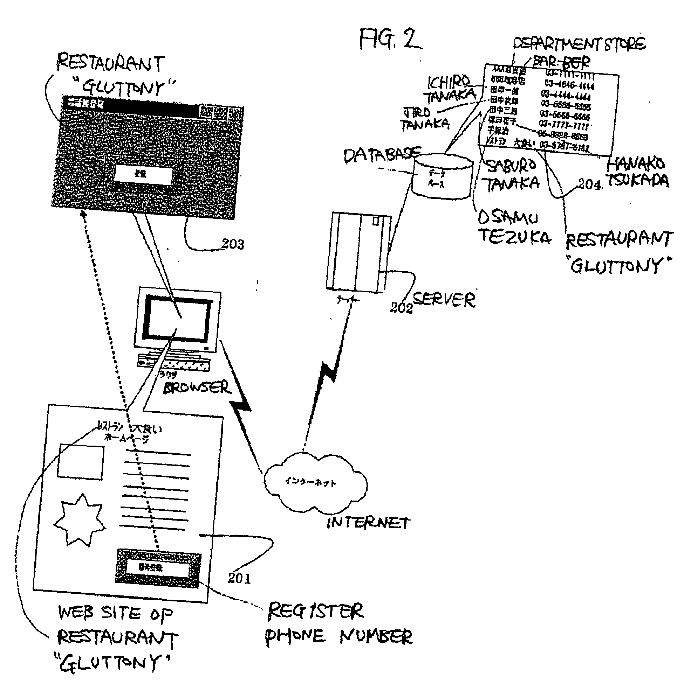

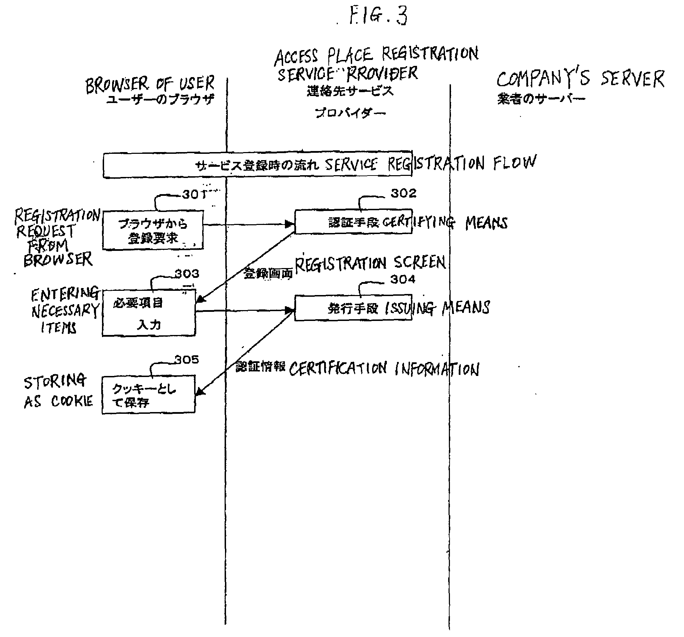

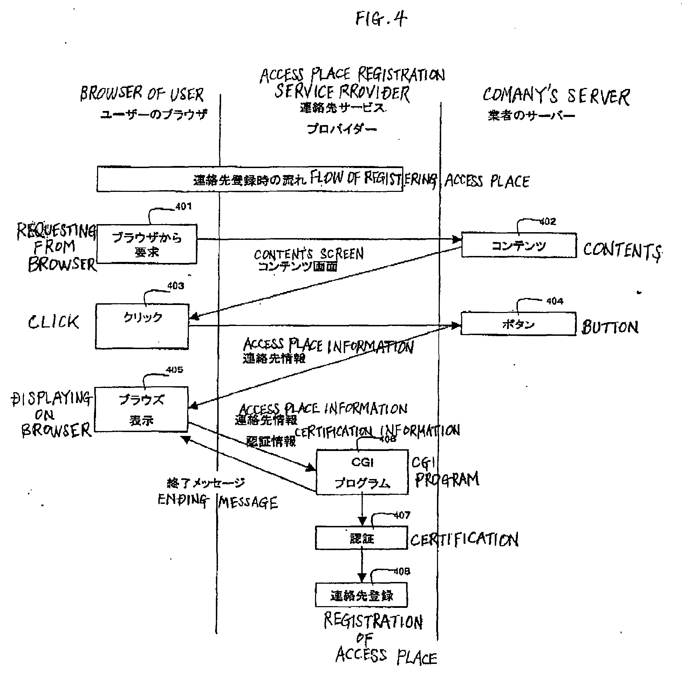

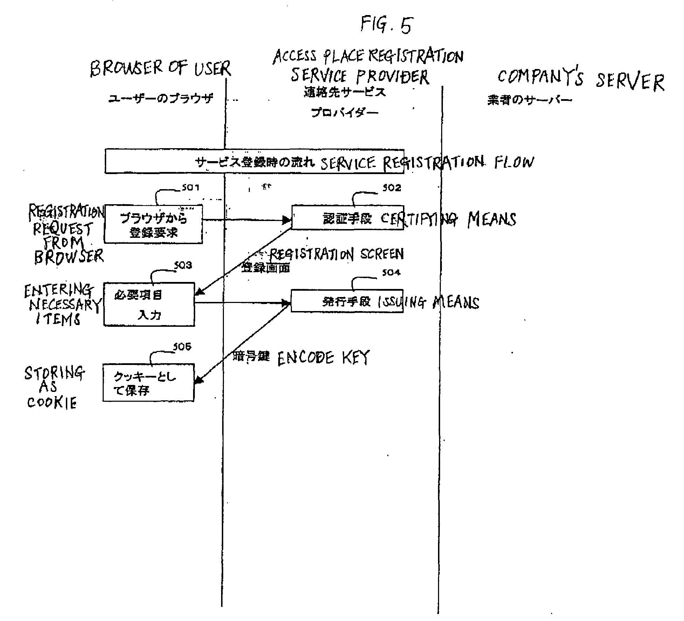

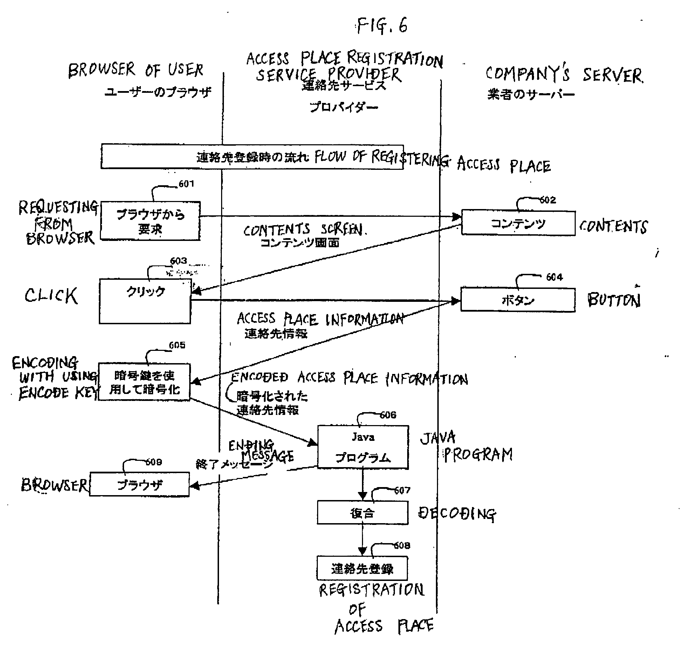

FIG. 1 is the entire image of a system of the first embodiment. FIG. 2 shows a screen page displayed when to be accessed address is registered. FIG. 3 shows a screen page displayed when contact information is registered. FIG. 4 is a detailed diagram for explaining the flow of coolies while registering the contact information.. FIG. 5 shows the flow, wherein contact information of a user is registered into a service provided, using a cryptography technique. FIG. 6 is a detailed diagram for explaining the cryptography technique during the flow of contact-information registration.

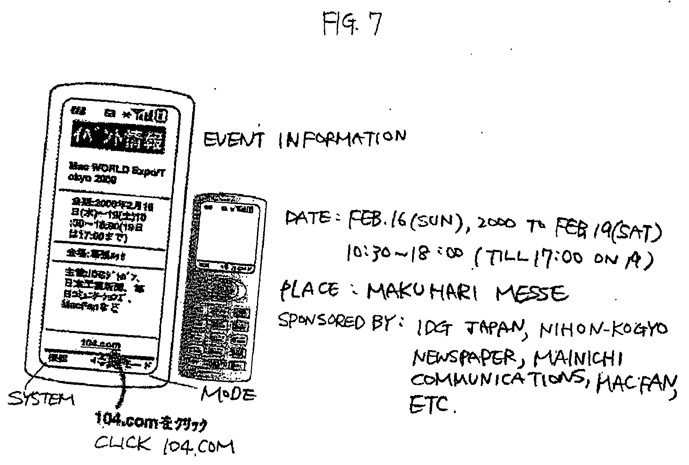

FIG. 7 is a display page for registering schedule data, and shows a Web site showing event information on a display section of a cellular phone.

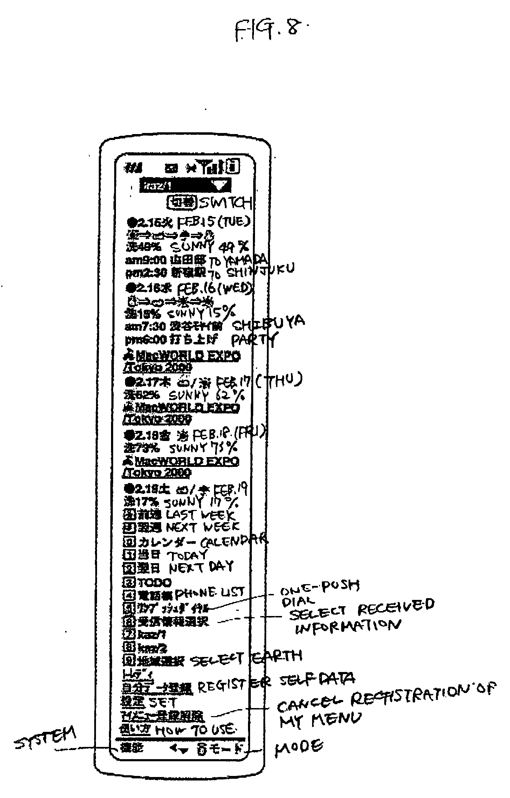

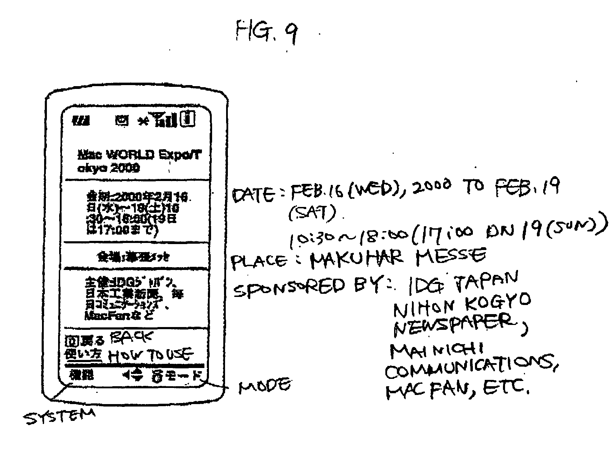

To confirm registered data, schedule data of personal information database is retrieved using a cellular phone. FIG. 8 shows a view page displaying the above schedule data on the cellular phone. FIG. 9 shows a screen page for registering schedule data.

FIG. 10 is a flowchart for explaining a process for issuing a button. FIG. 11 shows an inputting page during the process for issuing a button. FIG. 12 is a screen page for information completion of creating a button.

FIG. 13 is the entire image for a system of the second embodiment. FIG. 14 shows a browser screen page. FIG. 15 exemplifies a display page a display page for displaying schedule on the cellular phone. FIG. 16 shows an editing screen page for editing schedule. FIG. 17 shows a calendar for selecting a weekly schedule page. FIG. 18 shows the flow for setting sharing data.

FIG. 19 shows the flow of the third embodiment. FIG. 20 shows a display page for displaying a button "iPICK".

FIG. 21 shows a display page for displaying a search result, in the form of a memo paper showing search conditions to which text data are linked. FIG. 22 shows the detailed description of a selected train route.

FIG. 23 is a schematic structural diagram of an line shopping system using an information providing/display system of the present invention. FIG. 24 shows a state wherein a button is issued. FIG. 25 shows a series of actions, wherein a user watching contents of a shopping site through a browser clicks on a button and orders some item.

FIG. 26 shows a car-related site page and an ordering page. FIG. 27 shows a food site page and an ordering page. FIG. 28 shows a series of actions for performing a banking process.

Best Mode for Carrying Out the Invention

A detailed explanation will be given below with reference to the attached drawings. FIG. 1 shows an entire image of the system according to a first preferred embodiment. In FIG. 1, a user of a browser connected to the Internet is browsing a homepage 101 titled "Restaurant Gluttony" on his/her personal computer. If a number registration button displayed on this homepage is clicked, access place information set in the button is registered to a server of an access place registration service provider. The image numbered 102 shows the access place information stored in the server. This button is a banner set with access place information. When the button is clicked, one of a CGI script, a JAVA program and a JAVA script program is executed in the server. Data of the access place is passed to those programs as an argument, and stored in a personal database 105 prepared for each user. The stored access place information (the name of the restaurant, its phone number) can be browsed with using a cellular phone104 through a cellular phone company's server 103 and a cellular phone net.

In a case where a tag associated with a phone number is described in the access place information as the hyper text structure, a phone call can be made to the phone number by distinguishing the tag associated with the phone number in combination with a call making software program. In this case, an extension tag for a phone number is described as follows.

<TELNO>xx-xxx-xxxx</TELNO>

"xx-xxx-xxxx" represents a phone number to be called. The service provider and the server of the cellular phone company may communicate with each other through the Internet or directly through a private line.

In the above example, the access place information includes the name of the restaurant and its phone number. However, a person's name, a company's name, an e-mail address, or a URL of a site may also be included. Upon selecting an access place, not only a phone call but an e-mail may be communicated to the access place, and connection to the homepage of the access place may be available.

FIG. 2 shows a screen displayed on the homepage when registration of an access place is being done. When a button 201 of a homepage is clicked, a JAVA script is executed to display a new browser screen. The server 202 of the access place registration service provider requests an ID and a password of each user's communication device. After certification of the password is completed, the access place is registered in each user's database. The image numbered 204 shows thus registered access place. If a user who has been registered in the access place registration service provider, and thus stores a certification key or an open encode key as a cookie provided from the provider in the browser computer, he/she can skip the step of entering an ID and a password of the communication device.

How to use a cookie will now be de explained in detail. FIG. 3 is a block diagram showing a service registration flow of a user's registering himself/herself to the access place registration service provider. When a user sends a registration request 301 from the browser, certifying means 302 of the access place registration service provider sends back a registration screen. Then, a user enters the ID of the communication device, or fills in an optional item such as "you wish an automatic registration?" in the registration screen (entering necessary items 303). Thereafter, issuing means 304 executed by a CGI program issues certification information of a user's own. The certification information is stored as a cookie in a user's browser computer (storing as a cookie 305). FIG. 4 shows a flow of registering an access place. At the stage of requesting from the browser 401, a user acquires contents of a company's homepage (such as "Restaurant Gluttony"), and the contents are displayed on the browser. At the stage of click 403, a user clicks a button displayed on the contents. By the clicking, access place information as an argument, and maybe certification information stored as a cookie are passed to a CGI program 406 of the access place registration service provider. The provider compares the information and the cookie with a same user's stored certification key. If the certification 407 ended successfully, the provider registers the access place information (registering access place information 318). When the registration ends, or if the certification is unsuccessful, an ending message is sent back to the browser. At this time, with the use of a secret encode method, the communication device's ID and the appended information may be encoded to the certification key. On the other hand, so as to prevent a forgery of a button placed on the site of the provider, a certification identifier of the button may be embedded in the HTML which describes the button.

Next, the service registration using the encode method will be explained. The service registration flow of a user's registering himself/herself to the access place registration service provider will be described with reference to FIG. 5. When a user sends a registration request 501 from the browser, certifying means 502 of the provider sends back a registration screen. Then, a user enters a communication device's ID, or fills in an optional item such as "you wish an automatic registration?" in the registration screen. Afterwards, a user's own encode key is issued from a CGI program of issuing means 504. The encode key is stored as a cookie in a user's browser computer (storing as a cookie 505). A flow of registering an access place will be explained with reference to FIG. 6. A user acquires contents of a company's homepage (such as "Restaurant Gluttony") from a server of the homepage by sending a request 601 from the browser, and the contents are displayed on the browser. When a user clicks a button displayed on the contents, access place information is transmitted to a JAVA program, an Active X program or the like which moves on a user's computer. Those programs encode the access place information with using the encode key stored as a cookie, and send the encoded access place information to the provider. The provider decodes the transmitted telegram by a same user's stored encode key (decoding 607), and registers the access place (registering access place 608). This method is secure, because the certification key is not transmitted through a network by this method. The aforementioned certification identifier of the button may be described by the encode method and embedded in the HTML. In this case, the button is certified in a separately set-up certification site. As an appurtenant service of the certification site, number of clicks to a button may be counted, and informed to a company whose homepage the button is placed on. This service may be effective as a marketing service.

How to register schedule information to a schedule from a cellular phone terminal connectable to the Internet will now be explained. The flow of registering the schedule information is basically the same as the flow of registering access place information. FIG. 7 shows information of an event sponsoring site displayed on a display section of a cellular phone. The description "104.com" at the bottom of the display is a banner button. When the button is clicked, necessary information provided by the event sponsoring site is registered in a schedule section of a personal database. This system may be linked to a mailer. In this case, each user can set names of persons concerned in each user's schedule section. If schedule information is registered in the schedule section of such a user, mails are automatically sent to the persons concerned regularly.

In order to confirm registered data, each user calls the personal information database by his/her cellular phone. FIG. 8 shows a display section on which schedule information is displayed. On the display section, the screen is sectioned by date and time. "Computer Tokyo 2000" is a link text. If "Computer Tokyo 2000" is clicked, detailed information shown in FIG. 9 is called from the event sponsoring site and displayed on the display section.

If a concert or the like is held, an appointment may be required. In such a case, if a site informing of the concert or the like has a function for making an appointment, a user of a cellular phone sends a request of appointment. If the appointment is accepted, an identifier confirming the acceptance is registered in a proper section of the personal database.

If an appointment is made on the day of the concert, the appointment may be certified by certifying a transmission of an appointment acceptance identifier from an infrared radiation port of a cellular phone.

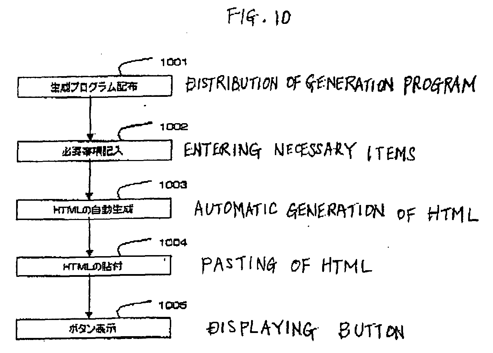

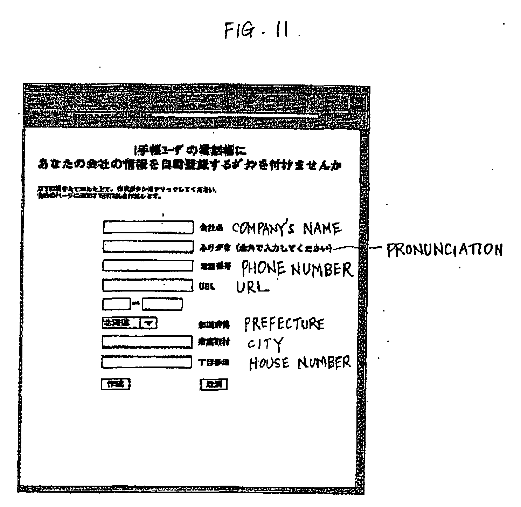

How to issue a banner or a button as a link text to an access place registration service provider or to an event sponsoring site will now be explained. FIG. 10 shows a flow of issuing a button. At the stage of sending a generation program 1001, a generation program is sent to an access place registration service provider or to an event sponsoring site as an information providing site, by an e-mail or in a storage medium such as a CD-ROM. At the stage of filling in necessary items 1002, a manager of an information providing site starts the generation program to fill information in the necessary items on an entering screen shown in FIG. 11.

In FIG. 11, the necessary items include a company's name, how to pronounce the company's name, the phone number, the URL, the postal code number, and the address. However, the present invention is not limited to filling in the above items. In case of concert ticket information, in addition to the name of the event, the date of the concert, and the place may be described. In case of a weather information providing site which provides weather forecasts, a link information or a pointer may be described so as to renew information on real-time.

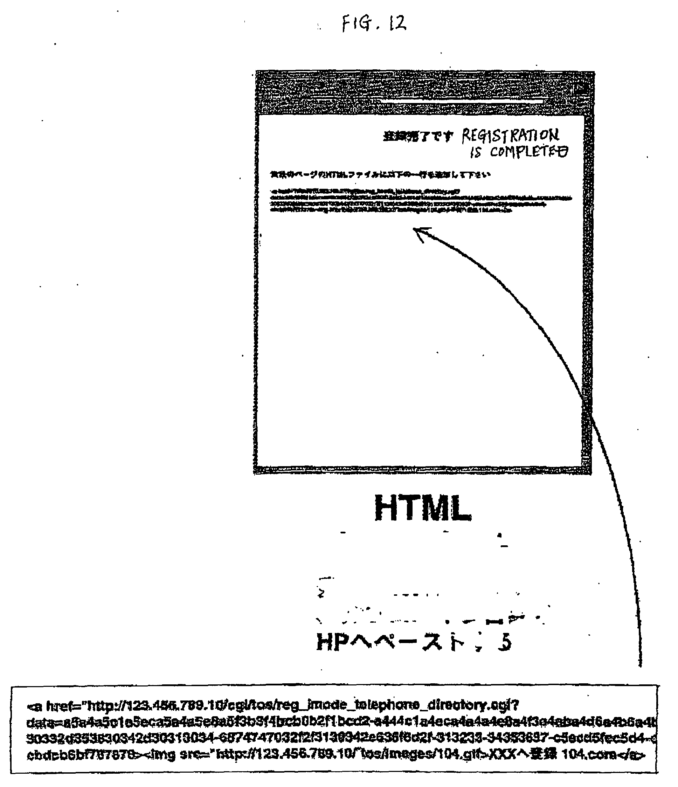

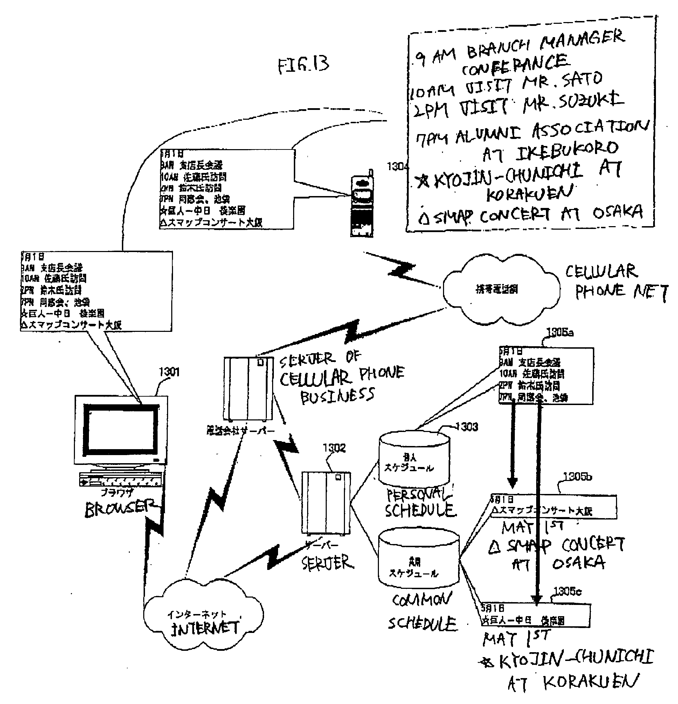

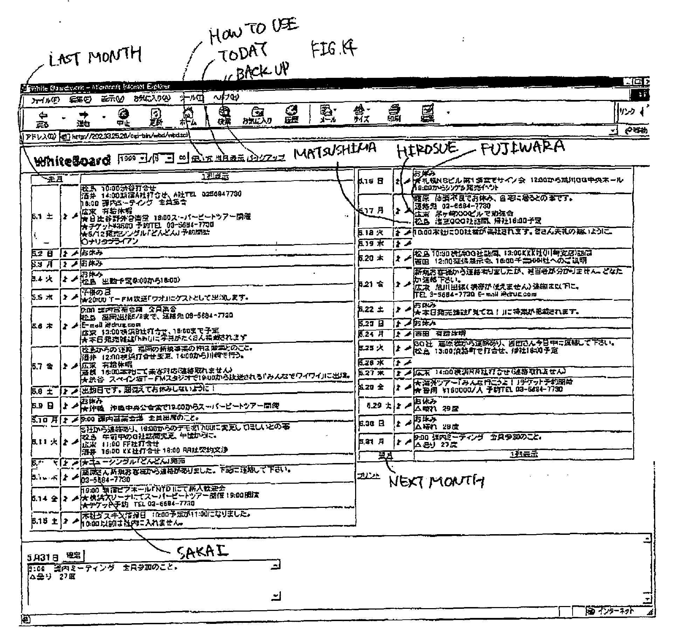

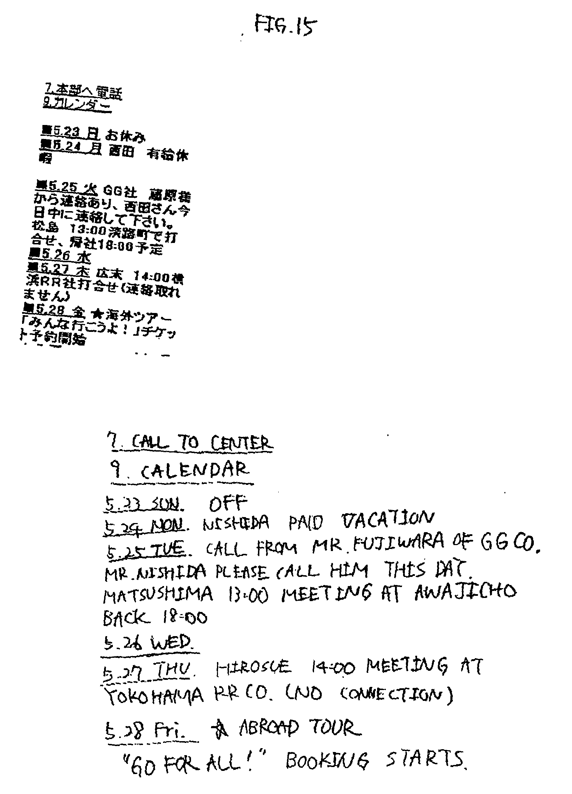

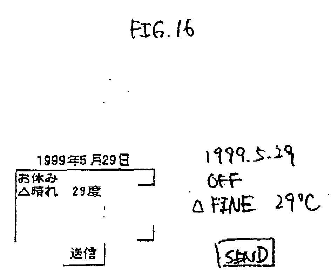

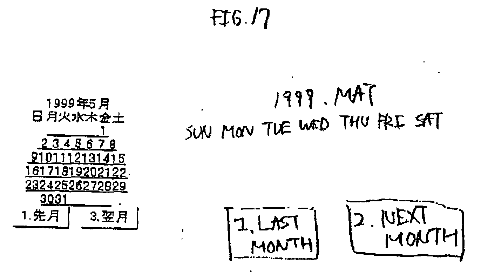

At the stage of automatic generation of HTML 1003, HTML embedded with the described information is generated. FIG. 12 shows a screen indicating a completion of the automatic generation program. The description at the bottom of FIG. 12 is the generated HTML. At the stage of pasting the HTML 1004, the HTML is cut and pasted on the homepage of the information providing site. At the stage of displaying a button 1005, a button for selecting necessary information to be provided is displayed on the homepage of the information providing site. If a user clicks this button, predetermined items are registered in a personal database which is specified by an ID of a cellular phone or a cookie or both of them.

If such software for generating a button and data is distributed to a site of each homepage, each site can easily generate a button by entering necessary items. In this embodiment, an access place registration service provider and an event sponsoring site are explained as the information providing site, the system and method of the present invention are not limited to those.

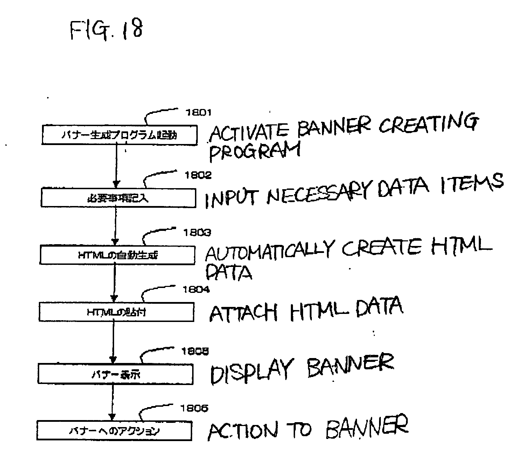

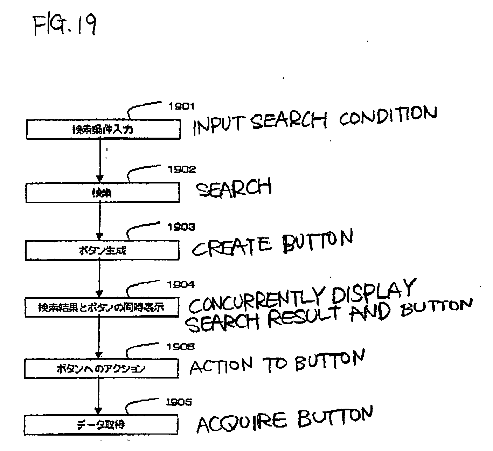

FIG. 13 illustrates a whole system according to the second embodiment to carry out the invention. A user inputs his/her schedules and events by a browser on a computer 1301 connected to the internet. His/her secretary, his/her family member or a staff of general affairs section of his/her company may input. FIG 14 illustrates the browser picture at this time. The server sends the Cookie to the server, to facilitate the identification of the user. The schedules and events can be input by clicking the icon beside the date. FIG. 14 shows the point of time where the user inputs his/her schedules and events on May 31st. An input box appears in the lowest frame. Return to FIG. 13, the schedules input are stored in a scheduler server 1302 which provides the scheduler function. Symbols 1305a, 1305b and 1305c show that the schedules on May 1st are stored in the server. The user may own the server.

At this time, in the schedule record of the user, as illustrated by an arrow 903 in FIG. 9, a link or a pointer to schedule data that the user subscribes voluntarily. This was obtained by giving an action to the button of a banner or a link text, in the same way as the registration of the schedule information in the first embodiment.

Namely, "SMAP concert at Osaka" is obtained from the schedule data subscribed from the site of SMAP fan club, and "Kyojin-Chunichi at Korakuen" is obtained from free schedule data from the site of Kyojin-gun fan club. As this way, various kinds of services push information to the user's schedule. Because the information are held in the user's schedule data as links or pointers, the newest data always exist in the user's schedule at real-time, even if the site which presents the information of the schedule data renews the information.

"Fine", displayed in the box of May 31st in FIG.

14, is a weather forecast that the site presenting weather information renews at real-time. The weather forecast is subscribed from the weather information presenting site, and is displayed in the box.

The user registers his/her personal information or information about his/ her living region to the personal database, to be allowed to receive the customized schedule data. For example, if the user registers "113-0033" which is a zip-code as an identifier about the region, and which is an identifier for Bunkyo-district of Tokyo, as for the geographical information such as "Fine" displayed in the box of May 31st in FIG. 14, the identifier for the region is automatically sent with a search request to the geo-server on the network, to receive the searched weather forecast information characteristic to the Bunkyo-district of Tokyo. However, the weather information is adopted as geographical information herein, the invention is not limited to this, the map, route or Yellow-page data, or the traffic jam information is available. The geo-server which obtains the geographical data using an identifier for place as above is realized by the prior art, for example, there has been "Maps OnUs" server accessible via internet at the web address of http://www.MapsOnUs.com. The identifier for place is not limited to this, so an address, a telephone number, a latitude and longitude data or a major landmark name is available.

However, here, the weather information is automatically obtained and displayed, it can be customized to display, for example, wave information in the box of May 31st in FIG. 14 by clicking a button given to a site which presents wave information. When using a button, if the identifier for certifying the button is buried in the button, it assures that the weather information is obtained from the right site, so that the user can utilize the weather information without anxiety.

Via a server of a cellular phone business, there is displayed in the cellular phone (a symbol 1304 in FIG. 13) the schedules which was made using the cellular phone or the browser placed in user's home or office. FIG. 15 exemplifies a picture of the cellular phone. By selecting the date, an editorial picture as shown in FIG. 16 appears, the schedule can be edited. FIG. 17 illustrates a calendar for selecting a picture of weekly schedule.

For example, if the line displayed as 30 31, the weekly schedule on May 30th and 31st is displayed.

In FIGs. 13 and 14, the marks of triangle, square and star headed at the line of the schedule are symbols show the source of the information respectively, and are generated based on the identifier buried in the information that each information presenting site pushes. This line is a link to a homepage etc., if selected, an explanation for details of the displayed information is displayed. The names displayed as "Matsusima", "Sakai", "Hirosue" and "Fujiwara" at the head of the lines show that the lines are the schedule data which were made by other persons utilizing this schedule note in common. Note that, the readable schedule data made by other persons are ones allowed to be open to the user by the setting of other persons.

FIG. 18 is a flowchart showing steps for sharing schedule data. In step 1801, for activating banner creating program, a user, whose wants to show his/her schedule to others, activates a program for automatically creating a banner on his/her terminal. In step 1802, for inputting required items, the user, who wants to show his/her schedule to others, inputs "User Name" and "Code Number" which are necessary for setting shared-data in an input page.

In step 1803, for automatically creating HTML data, HTML data including the input data items is created. In step 1804, for attaching HTML data, the user sends an e-mail including the HTML data which has been cut and pasted into the e-mail to a person (another user of a scheduling system of the present invention) whom the user wants to share the HTML data. In step 1805, for displaying a banner, a sharing automatic setting banner is displayed on a terminal of the person whom the user wants to share the banner with. In step 1806, for action to a banner, the another user clicks on the displayed banner, thereby the user which has been specified by a user ID and/or cookie of the portable terminal completes a sharing process for obtaining schedule data of the user who wants to show his/her schedule to others.

If a group of people who want to show their schedule to each other sends an e-mail, to which a banner is attached, to each other, it becomes possible to achieve an data sharing operation, which has conventionally accomplished with a complicated processes, with ease by performing an easy action toward the banner. In the process for creating the sharing banner, if the expiration time is included in the HTML data, any undesired troubles can be avoided. Thus, the group of people can be relieved to use the system.

If the frequency of actions made to a button or banner is counted and the counted frequency is sent to the users, the improvement toward the system can be effectively performed. This can be effective in the study of the marketing of the system.

In the structure where the personal scheduling system included in the above-described cellular phone receives data which has been made by any other users, an innovative push-pull-type data communication media can be realized. In this specification, the terminal of the user has been described as a cellular phone. However, the terminal thereof is not limited to a cellular phone, and any other type of terminals can be employed, such as a browser terminal, PDA (Personal Data Assistance) which is connectable to networks to accomplish the object of the present invention.

FIG. 19 shows a flowchart of the third embodiment of the present invention. The description will now be made to a method for searching and acquiring a Web site showing transfer information for traffic information, with the utilization of a cellular phone, in the case where the user intends to get "Urawa" station from "Hongo-3-chome" station.

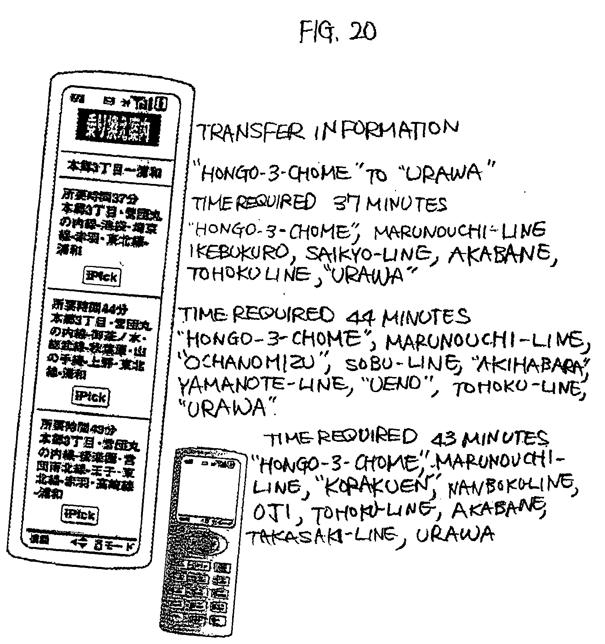

In step 1901, for inputting a search condition, the user inputs names of train stations from and to the user travels, through the Web site showing the transfer information and included in the system of the present invention. In this case, the user inputs "Hongo-3-chome" as the station from where the user gets in and "Urawa" as the station to where the user gets off. In step 1902 for searching, the route is searched based on the search condition representing the stations from where the user gets in the train and to where the user gets off the train. The searching of such train information can be realized with a conventional technique, using software like "Ekisupaato" (Val Laboratory Corporation). In step 1903, for creating a button, a button which functions in accordance with HTML or XML data for showing search-result data is created in accordance with the same automatic producing program of the first embodiment. No data items are necessarily filled, because data items to be input have already been existed as a search result. In step 1904, for concurrently displaying the search result and a button, the train route as the search result and a button "iPICK" are displayed on the user terminal. FIG. 20 shows a page for displaying such information. In step 1905, for performing an operation toward a button, the button is selected by scrolling the scroll bar and pushed using a pointing device. In step 1906, for acquiring data, information included in the button, i.e. personal data regarding the route data from "Hongo-3-chome" to "Urawa", is registered.

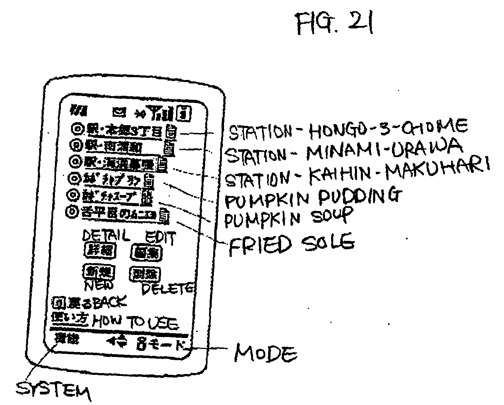

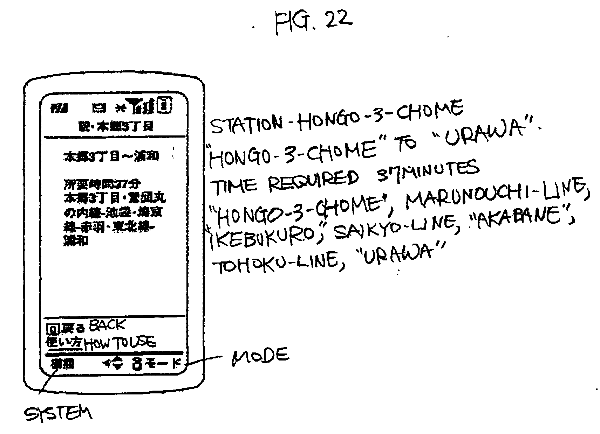

The search result include different information for each search operation, therefore, the button is created based o the searched route data and for each time the search is made. To display the route data, the route data is read out from personal data and displayed using the above-described cellular phone. A page , in the size of scratch paper, showing text data to which information representing various search results are linked is employed, as shown in FIG. 21. Such search results are classified according to fields of information, such as "Station", "Food", etc. In this page, the text data showing "Station, Hongo-3-chome" is selected, and a button "Detail" is pressed. Then, the detailed description of the train route is displayed as shown in FIG. 22. In this example, the information regarding "Food" which has nothing to do with the train route is displayed on the same page. However, in the case where only the train route data is necessary, the route may be displayed on a certain map.

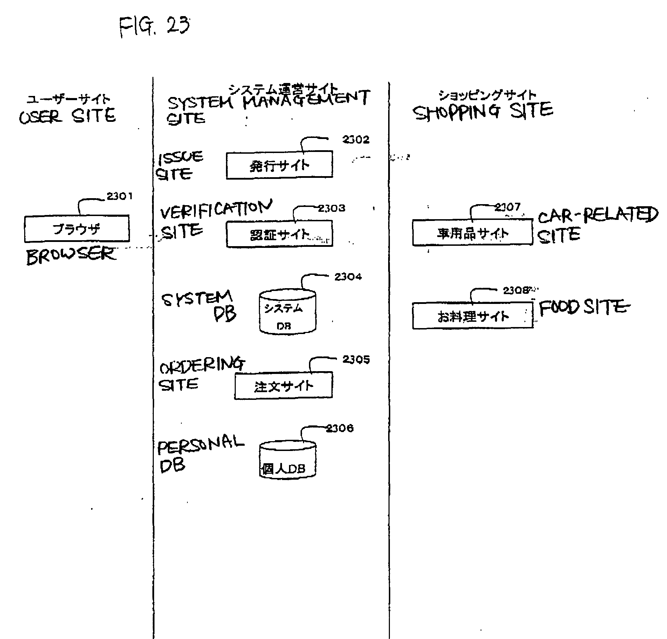

FIG. 23 is a schematic structural diagram showing an online-shopping system using the information providing/displaying system of the present invention. This online-shopping system includes: a user site using a browser 2301; a system management site including an issue site 2302, a authentication site 2303, a system database 2304, a personal database 2305, and an ordering site 2306; and a shopping site including car-related site 2307, and a food site 2308.

The shopping site is to include the car-related site 2307 and the food site 2308. However, the present invention is not limited to the above, and any other WWW site having contents of various product information or food information can be employed.

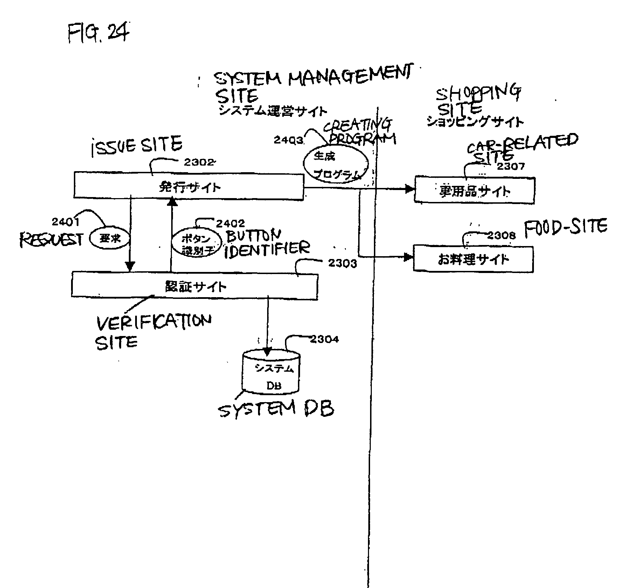

FIG. 24 shows the state in which the issue site 2302 sends a button identifier which has been issued by the authentication site 2302, together with a producing program, to the shopping site, in the above-described structure. If the issue site 2302 sends a request for producing a button identifier to the authentication site 2303, a button identifier 2402 is produced and sent to the issue site 2302. Then, the issue site 2302 sends the button identifier after being included in a creating program 2403, to the shopping site. In each of the car-related site 2307 and food site 2308, the producing program which has been sent to each thereof is activated, so as to input providing information in necessary data items through an input page, likewise the first embodiment. In accordance with the producing program sent to the car-related site, catalogue spec to be displayed on the browser and a product ID and price of an ordered product are input. In accordance with the producing program sent to the food site, receipt information to be displayed on the browser and product IDs and price of foods or price data to be linked to the current price information are input.

The HTML data is automatically created and the button to be attached to the contents of each of the above-described sites is created, likewise the first embodiment. However, such button includes not only the providing information, but also the button identifier which has been issued from the authentication site. The issue site is registered together with the issued identifier in the system database 2304, thereby to authenticate the button.

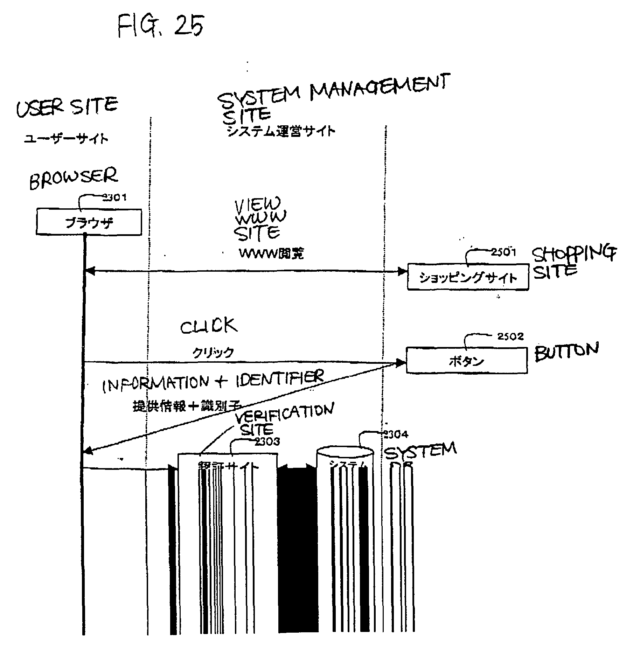

FIG. 25 shows a series of processes, in which the user watching the contents of the shopping site 2501 through the browser clicks on a button 2502 and orders in an ordering page. The user watches a WWW site, i. e. the contents of the shopping site 2501 using the browser 2301. If the user clicks on the button included in the contents, a button identifier is sent to the authentication site 2302, together with providing information. In the authentication site 2302, information registered in the system database 2304 is referred, so as to authenticate the button. If it is authenticated that the button is a proper button, the providing information is sent to an ordering Web site, the ordering page including the providing information and personal information of the personal database 2306 is produced and displayed on the browser 2301. Then, once the user inputs the number of items to be purchased, the ordering is automatically accomplished. This ordering page is created based on the authentication result of the button. For example, if action is made to the button for the car-related site 2307, a car-related ordering page is created, whereas action is made to the button for the food site 2309, a food ordering page is created. The personal information stored in the personal database 2306 includes an address to where a purchased product is delivered and a credit-card number necessary for settlement. Therefore, such information that the user may get nervous to input and sent through a network, in consideration of the security, is not necessarily input every time the transmission is made.

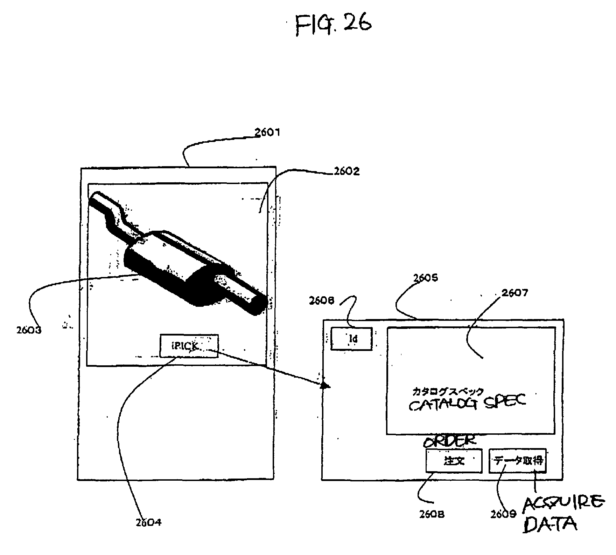

FIG. 26 shows a state wherein the contents of the car-related site including the created button attached thereto are displayed on the terminal of the user. The user terminal 2601 is a cellular phone including a browser system. On an LCD 2602 of the cellular phone, the contents 2603 for the car-related site and a button 2604 are displayed. The contents show a silencer of an automobile. A reference numeral 2605 denotes an ordering page. The ordering page includes a catalogue ID 2606, catalogue spec 2607, an ordering button 2608, and a data acquisition button 2609. The user only needs to click on the button, thereby to order desired item or acquire catalogue data.

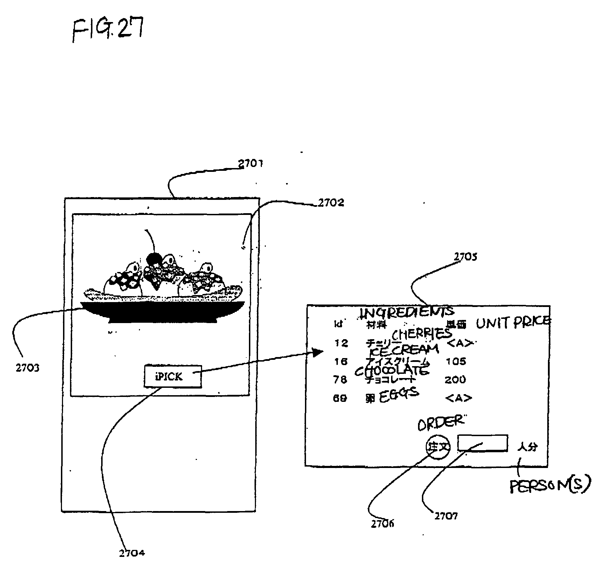

FIG. 27 shows a state, wherein contents of a food site to which a created button is attached are displayed on the terminal of the user. A user terminal 2701 is a PDA (Personal Data Assistance) including the browser system. Displayed on an LCD 2702 are contents 2703 of the food site and a button 2704. Shown in the contents is a piece of ice cream cake. A reference numeral 2705 denotes an ordering page. If the user inputs a necessary number in a column 2706 for inputting the number of persons, and clicks on an ordering button 2708, the ordering can be accomplished with ease.

In such a system having the above structure, the online shopping system can safely be realized with ease at a shopping Web site which exists on a network.

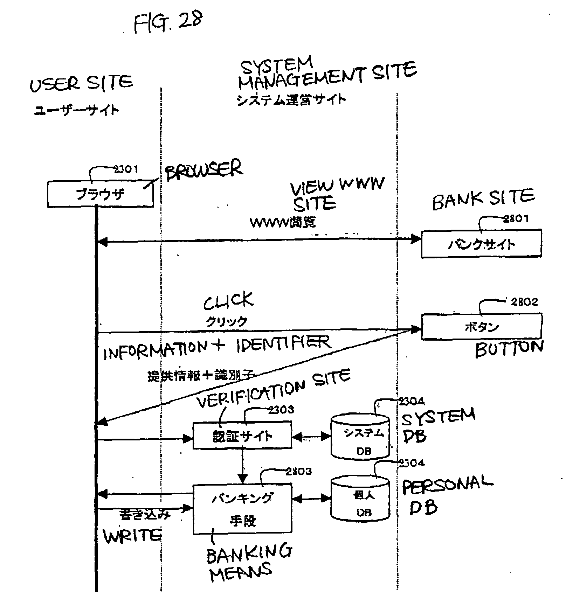

In this embodiment, the shopping site has been employed to the system of the present invention. Any banking sites can similarly be employed to the system of the present invention. FIG. 28 is shows a series of processes, wherein the user showing the contents of a bank site 2801 using the browser clicks on a button 2802 and visits a banking page. The user is to view a WWW site showing contents of the banking site 2801, using the browser 2301. If the user clicks on the button included in the contents, providing information and a button identifier are sent to the authentication site 2303. In the authentication site 2303, information registered in the system database 2303 is referred and the button is authenticated. If it is authenticated that the button is a proper button, the providing information is sent to banking means 2804, and a banking operational page having the providing information and personal information of the personal database 2305 is crated. The created banking operational page is displayed on the browser 2301. In the created banking operational page, the user is requested to input necessary data items, such as the amount of money to be handled and the number of cases. If the requested data items are input and settled, a banking operation is automatically processed. The personal information of the personal database 2306 includes the personal account number of the user and a corresponding code number. Therefore, such information that the user may get nervous to input and sent through a network, in consideration of the security, is not necessarily input every time the transmission is made.

In such a system having the above structure, the online banking system can be realized in accordance with an easy operation at any shopping sites which exist on the network.

**Claims**

1. A system which allows a user to fetch information given by information provider sites on a network through a user's terminal, wherein said system comprising:

   1) a personal information data base which stores personal information prepared user by user;
   2) fetch buttons to be displayed on said users terminals simultaneously when said user terminals display the contents given by said information provider site, wherein each of said buttons includes the given information, and transfers the given information which has been fitted to data definition of said personal information database to said personal information database in response to the user's action; and
   3) display means which displays a browser image into which the information stored on said personal information database is inserted, on said user terminal in response to the user's call.

2. The system according to claim 1, wherein the provided information includes at least selected one of contact information pieces of name, company name, shop name, address, phone number, video phone number, pager number, e-mail address, URL of the information providing site.

3. The system according to claim 2, wherein at least selected one of contact actions of activating a mailer program, calling, and activating a browser program is linked to applying an action to said contact information displayed on said user terminal.

4. The system according to claim 1, wherein the provided information includes at least selected one of catalogue information pieces of size, spec, price, deadline, recipe, ingredients list, real estate data, validity term, issue date.

5. The system according to claim 4, wherein at least selected one of purchase actions of activating an electronic commerce program and activating an order program is linked to applying an action to the catalogue information piece displayed on said user terminal.

6. The system according to claim 1, wherein said provided information includes at least selected one of schedule information pieces of sport game schedule, TV program on-air schedule, concert schedule, reservation of restaurant, reservation of transportation, and reservation of hotels.

7. The system according to claim 6, wherein the schedule information links to a reservation system of said information provider site, thus, reservation data of established reservation is registered at predetermined area in said personal information database.

8. The system according to claim 1, wherein the provided information includes at least selected one of traffic information pieces of route information, transfer information, fare information, and time table information.

9. The system according to claim 8, wherein said traffic information links to a reservation system of said information provider site, thus, reservation data of established reservation is registered at predetermined area in said personal information database.

10. The system according to claim 1, wherein the provided information includes at least selected one of financial information pieces of balance of savings, balance of investment deposit, delivery date, company information, and corporate brand information.

11. The system according to claim 10, wherein the financial information links to a mobile finance system relating to said information provider site.

12. The system according to claim 1, wherein said data definition represents database definition which employs at least selected one of formats of address book format, yellow-page format, and to-do list format.

13. The system according to claim 1, wherein the provided information includes time stamp information.

14. The method according to claim 1, wherein data in said personal information database are arranged in time series in accordance with the time stamp information.

15. The system according to claim 13, wherein said browser image represents to-do list format image showing time zones into which the provided information is inserted appropriately after recognizing the time stamp information.

16. The system according to claim 1, wherein the provided information includes person index information.

17. The system according to claim 1, wherein the data in said personal information database are arranged person by person in accordance with the person index information.

18. The system according to claim 16, wherein said browser image is divided into areas person by person, and the provided information is inserted into the appropriate area after recognizing the person index information.

19. The system according to claim 1, wherein the provided information includes location index information.

20. The system according to claim 1, wherein the data in said personal information database are arranged region by region in accordance with the location index information.

21. The system according to claim 1, wherein the location index information represents at least selected one of address, phone number, facsimile number, zip code, latitude/longitude, and URL.

22. The system according to claim 19, wherein said browser image represents at least selected one of map image and an image showing divided areas, and the provided information is inserted into said browser image appropriately after recognizing the location index information.

23. The system according to claim 1, where in said button is written by a markup language.

24. The system according to claim 1 further comprising issuing means for issuing said button to said information provider site.

25. The system according to claim 1 further comprising issuing means for issuing a button generator program for generating said button to said information provider site.

26. The system according to claim 25, wherein said button generator program includes data burying means for generating to-be provided information so as to be matched for the data definition of said personal information database in response to input of data to be provided to the user by said information provider site, and for burying thus generated to-be provided information into said button.

27. The system according to claim 1, wherein said system builds an authentication site for authenticating said button, issues site index information for distinguishing the information provider site or button index information for identifying said button itself, and burying the site index information or button index information into said button.

28. The system according to claim 27, wherein at least selected one of the site index information for distinguishing said information provider site, the button index information for identifying the button itself, and the provided information is encoded.

29. The system according to claim 28, wherein the provided information is encoded by at least selected one of public key cryptosystem and secret key cryptosystem.

30. The system according to claim 1, wherein said system counts the number of depression times of said button.

31. The system according to claim 1 further comprising edit means for performing at least selected one of allowing a user to create personal information to be stored in said personal information database, and edition the provided information.

32. The system according to claim 13 or 15, wherein said system automatically transmits a predetermined fixed mail to address relating to the schedule data included in newly fetched provided information.

33. The system according to claim 1, wherein said user terminal is a portable device having a browser.

34. The system according to claim 33, wherein said system carries out user authentication with using fixed ID of said user terminal or cookie file, or both of them when transferring the provided information to said personal information database, and transfers the provided information to said personal information database of the authenticated user.

35. The system according to claim 1, wherein said user terminal is a personal computer.

36. The system according to claim 35, wherein said system carries out user authentication with using fixed ID of said user terminal or cookie file, or both of them when transferring the provided information to said personal information database, and transfers the provided information to said personal information database of the authenticated user.

37. The system according to claim 1, wherein said network is at least selected one of Internet, intranet, and Extranet.

38. The system according to claim 1, wherein connection to said network is established through at least selected one of public switched telephone network, cellular phone network, in-office network, and the integrated services digital network.

39. The system according to claim 1 or 3, wherein the action is at least selected one of clicking, voice operation, jog-dial operation, and keyboard operation.

40. A system which allows users to fetch information a network through user terminals, wherein said system comprising:

1) a personal information database which stores personal information of the users;
2) search result display means for displaying found information segments which match for search condition previously set by the user, with affixing fetch buttons to the segments;
3) information fetch means for transfers information corresponding to the fetch button to which the user's action is applied, to said personal information database; and
4) browser means for generating a browser image in response to the user's call, and for displaying the fetched information on said personal information database on said user terminal.

41. The system according to claim 40, wherein the searched information or information on the browser image fetched from said personal information database is displayed after arranging the information in accordance with at least selected one of time, location and person.

42. The system according to claim 40, where in said button is written by a markup language.

43. The system according to claim 1 further comprising issuing means for issuing said button to said information provider site.

44. The system according to claim 40 further comprising issuing means for issuing a button generating program for generating said button to said information provider site.

45. The system according to claim 44, wherein said button generator program includes data burying means for generating to-be provided information so as to be matched for the data definition of said personal information database in response to input of data to be provided to the user by said information provider site, and for burying thus generated to-be provided information into said button.

46. The system according to claim 40, wherein said system builds an authentication site for authenticating said button, issues site index information for distinguishing the information provider site or button index information for identifying said button itself, and burying the site index information or button index information into said button.

47. The system according to claim 46, wherein at least selected one of the site index information for distinguishing said information provider site, the button index information for identifying the button itself, and the provided information is encoded.

48. The system according to claim 47, wherein the provided information is encoded by at least selected one of public key cryptosystem and secret key cryptosystem.

49. The system according to claim 40, wherein said system counts the number of depression times of said button.

50. The system according to claim 1 further comprising edit means for performing at least selected one of allowing a user to create personal information to be stored in said personal information database, and edition the provided information.

51. The system according to claim 40, wherein said user terminal is a personal data assistants.

52. The system according to claim 51, wherein said information search is carried out with using search conditions stored in said personal information database of the user who is authenticated with using fixed ID of said user terminal or cookie file, or both of them.

53. The system according to claim 40 or 51, wherein said information browsing is carried out by displaying information stored in said personal information database of a user who is authenticated with using fixed ID of said user terminal or cookie file, or both of them.

54. The system according to claim 40, wherein said user terminal is a personal computer.

55. The system according to claim 51, wherein said system carries out user authentication with using fixed ID of said user terminal or cookie file, or both of them when transferring the provided information to said personal information database, and transfers the provided information to said personal information database of the authenticated user.

56. The system according to claim 40, wherein said system accesses a geo server which manages weather information to be provided through said network to search for the information.

57. A system which allows a user to share his/her personal information stored on a personal information database with other users, wherein said system comprising:

1) a personal information database which is managed by a system managing site to stored personal information of the users; and
2) issuing means for issuing a common information button to the users in response to the users' request, said common information button sets a terminal which applies an action to the button, as a user sharing said personal information database of said user, and
    further comprising the steps of:

a) sending an e-mail with attaching said common information button thereto, to other users;
b) displaying said e-mail on the other user's terminal, and applying an action to the button attached to said displayed e-mail;
c) registering said terminal which applies the action to said common information button as a common user of said personal information database; and
e) generating a browser image in response to the other users' call immediately, and displaying common information stored in said personal information database on the other users' terminal.

58. The system according to claim 57, wherein said system allows a user to determine whether some or whole of the personal information pieces to be shared by the other user through his/her user terminal.

59. The system according to claim 57, wherein user index information necessary for setting information sharing is buried in said button.

60. The system according to claim 57, wherein validity term is set to said button, thus, the information sharing function is canceled after a predetermined time period.

61. The system according to claim 57, wherein ID fixed to the other users' terminal are used as common user index information while registering a terminal to which the action is applied as the common user.

62. The system according to claim 61, wherein said user terminal is a portable device having a browser.

63. A system which allows a user to fetch geographical information including at least selected one of map information, route information, traffic information or traffic jam information from sites on a network through a user terminal, wherein said system comprising:

1) a personal information database which stores personal information prepared user by user;
2) an information fetch button to be displayed on said user terminal, wherein said information fetch button includes identification information representing location data segments of address, phone number, zip code, latitude/longitude, and landmark name, and transfers one of said location data segments relating to the contents being browsed by a user who applies an action to said button, to said personal information database; and
3) display means for generating said geographical information with using the identification information relating to said location in response to the user's call, and for displaying the generated geographical information on said user terminal.

64. The system according to claim 63, where in said button is written by a markup language.

65. The system according to claim 63, wherein said user terminal has position detection means, and position of the user terminal when the action is applied is used for generating the geographical information.

66. The system according to claim 64 further comprising issuing means for issuing said button to said information provider site.

67. The system according to claim 64 further comprising issuing means for issuing a button generator program for generating said button to said information provider site.

68. The system according to claim 67, wherein said button generator program includes data burying means for generating to-be provided information so as to be matched for the data definition of said personal information database in response to input of data to be provided to the user by said information provider site, and for burying thus generated to-be provided information into said button.

69. The system according to claim 64, wherein said system builds an authentication site for authenticating said button, issues site index information for distinguishing the information provider site or button index information for identifying said button itself, and burying the site index information or button index information into said button.

70. The system according to claim 68, wherein at least selected one of the site index information for distinguishing said information provider site, the button index information for identifying the button itself, and the provided information is encoded.

71. The system according to claim 70, wherein the provided information is encoded by public key cryptosystem.

72. The system according to claim 69, wherein said system counts the number of depression times of said button.

73. A provided information displaying method which is applied to a system which allows a user to fetch information provided by information providing sites on a network through a user terminal connected to said network, wherein said method comprising the steps of:

1) issuing an information fetch button written by a markup language which is the same as the markup language which building said provided information, to the information provider site;
2) attaching said information fetch button to the contents given by said information provider site;
3) allowing the user to display the information given by said information provider site on the user terminal;
4) allowing the user to apply an action to the displayed information fetch button being attached to the information given by said information provider site;
5) transferring the information given by the information provider site being browsed by the user to a personal information database prepared user by user, in response to the action; and
6) generating a browser image in response to the user's call immediately, and displaying the information stored in said personal information database on said user terminal.

74. The system according to claim 73, wherein the provided information includes at least selected one of contact information pieces of name, company name, shop name, address, phone number, video phone number, pager number, e-mail address, URL of the information providing site.

75. The system according to claim 73, wherein at least selected one of contact actions of activating a mailer program, calling, and activating a browser program is linked to applying an action to said contact information displayed on said user terminal.

76. The system according to claim 73, wherein the provided information includes at least selected one of catalogue information pieces of size, spec, price, deadline, recipe, ingredients list, real estate data, validity term, issue date.

77. The system according to claim 76, wherein at least selected one of purchase actions of activating an electronic commerce program and activating an order program is linked to applying an action to the catalogue information piece displayed on said user terminal.

78. The system according to claim 73, wherein said provided information includes at least selected one of schedule information pieces of sport game schedule, TV program on-air schedule, concert schedule, reservation of restaurant, reservation of transportation, and reservation of hotels.

79. The system according to claim 73, wherein the schedule information links to a reservation system of said information provider site, thus, reservation data of established reservation is registered at predetermined area in said personal information database.

80. The system according to claim 73, wherein the provided information includes at least selected one of traffic information pieces of route information, transfer information, fare information, and time table information.

81. The system according to claim 80, wherein said traffic information links to a reservation system of said information provider site, thus, reservation data of established reservation is registered at predetermined area in said personal information database.

82. The system according to claim 73, wherein the provided information includes at least selected one of financial information pieces of balance of savings, balance of investment deposit, delivery date, company information, and corporate brand information.

83. The system according to claim 82, wherein the financial information links to a mobile finance system relating to said information provider site.

84. The system according to claim 73, wherein the provided information includes time stamp information.

85. The method according to claim 84, wherein data in said personal information database are arranged in time series in accordance with the time stamp information.

86. The system according to claim 85, wherein said browser image represents to-do list format image showing time zones into which the provided information is inserted appropriately after recognizing the time stamp information.

87. The system according to claim 73, wherein the provided information includes person index information.

88. The system according to claim 87, wherein the data in said personal information database are arranged person by person in accordance with the person index information.

89. The system according to claim 88, wherein said browser image is divided into areas person by person, and the provided information is inserted into the appropriate area after recognizing the person index information.

90. The system according to claim 73, wherein the provided information includes location index information.

91. The system according to claim 90, wherein the data in said personal information database are arranged region by region in accordance with the location index information.

92. The system according to claim 90, wherein said browser image represents at least selected one of map image and an image showing divided areas, and the provided information is inserted into said browser image appropriately after recognizing the location index information.

93. The method according to claim 73, wherein said issuing the button is carried out by distributing the button generator program to said information provider site, thus, the button is generated at said information provider site.

94. The system according to claim 93, wherein said button generator program includes data burying means for generating to-be provided information so as to be matched for the data definition of said personal information database in response to input of data to be provided to the user by said information provider site, and for burying thus generated to-be provided information into said button.

**95.** The system according to claim 73, wherein said system builds an authentication site for authenticating said button, issues site index information for distinguishing the information provider site or button index information for identifying said button itself, and burying the site index information or button index information into said button.

**96.** The system according to claim 95, wherein at least selected one of the site index information for distinguishing said information provider site, the button index information for identifying the button itself, and the provided information is encoded.

**97.** The system according to claim 96, wherein the provided information is encoded by public key cryptosystem.

**98.** The system according to claim 95, wherein said system counts the number of depression times of said button.

**99.** The method according to claim 73, wherein the personal information to be stored in said personal information database is at least selected one of information created by the user him/herself and the provided information.

**100.** The system according to claim 84 or 86, wherein said system automatically transmits a predetermined fixed mail to address relating to the schedule data included in newly fetched provided information.

**101.** The system according to claim 73, wherein said user terminal is a personal data assistants.

**102.** The system according to claim 73 or 101, wherein said system carries out user authentication with using fixed ID of said user terminal or cookie file, or both of them when transferring the provided information to said personal information database, and transfers the provided information to said personal information database of the authenticated user.

**103.** The system according to claim 73, wherein said network is at least selected one of Internet, intranet, and Extranet.

**104.** The system according to claim 73, wherein connection to said network is established through at least selected one of public switched telephone network, cellular phone network, in-office network, and the integrated services digital network.

**105.** The system according to claim 73 or 75, wherein the action is at least selected one of clicking, voice operation, jog-dial operation, and keyboard operation.

FIG. 1

FIG. 2

RESTAURANT "GLUTTONY"

203

BROWSER

WEB SITE OF RESTAURANT "GLUTTONY"

REGISTER PHONE NUMBER

201

INTERNET

SERVER 202

DATABASE

DEPARTMENT STORE
BAR-BER
ICHIRO TANAKA
JIRO TANAKA
SABURO TANAKA
OSAMU TEZUKA
HANAKO TSUKADA
RESTAURANT "GLUTTONY"
204

EP 1 193 617 A1

FIG.3

ACCESS PLACE REGISTRATION
SERVICE PROVIDER
連絡先サービス
プロバイダー

BROWSER OF USER
ユーザーのブラウザ

COMPANY'S SERVER
業者のサーバー

サービス登録時の流れ SERVICE REGISTRATION FLOW

REGISTRATION
REQUEST
FROM
BROWSER

301
ブラウザから
登録要求

302
認証手段 CERTIFYING MEANS

登録画面 REGISTRATION SCREEN

ENTERING
NECESSARY
ITEMS

303
必要項目
入力

304
発行手段 ISSUING MEANS

STORING
AS COOKIE

305
クッキーとし
て保存

認証情報 CERTIFICATION INFORMATION

19

FIG.4

BROWSER OF USER
ユーザーのブラウザ

ACCESS PLACE REGISTRATION
SERVICE RROVIDER
連絡先サービス
プロバイダー

COMANY'S SERVER
業者のサーバー

連絡先登録時の流れ FLOW OF REGISTERING ACCESS PLACE

REQUESTING FROM BROWSER

401
ブラウザから
要求

402
コンテンツ  CONTENTS

CONTENTS SCREEN
コンテンツ画面

CLICK

403
クリック

404
ボタン  BUTTON

ACCESS PLACE INFORMATION
連絡先情報

DISPLAYING ON BROWSER

405
ブラウズ
表示

ACCESS PLACE INFORMATION
連絡先情報
認証情報 CERTIFICATION INFORMATION

406
CGI
プログラム  CGI PROGRAM

終了メッセージ
ENDING MESSAGE

407
認証  CERTIFICATION

408
連絡先登録

REGISTRATION
OF
ACCESS PLACE

FIG. 5

BROWSER OF USER
ユーザーのブラウザ

ACCESS PLACE REGISTRATION
SERVICE PROVIDER
連絡先サービス
プロバイダー

COMPANY'S SERVER
業者のサーバー

サービス登録時の流れ SERVICE REGISTRATION FLOW

REGISTRATION
REQUEST
FROM
BROWSER

501
ブラウザから
登録要求

502
認証手段 CERTIFYING MEANS

REGISTRATION SCREEN
登録画面

ENTERING
NECESSARY
ITEMS

503
必要項目
入力

504
発行手段 ISSUING MEANS

STORING
AS
COOKIE

505
クッキーとし
て保存

暗号鍵 ENCODE KEY

21

EP 1 193 617 A1

FIG. 6

BROWSER OF USER
ユーザーのブラウザ

ACCESS PLACE REGISTRATION
SERVICE PROVIDER
連絡先サービス
プロバイダー

COMPANY'S SERVER
業者のサーバー

連絡先登録時の流れ FLOW OF REGISTERING ACCESS PLACE

REQUESTING FROM BROWSER

601
ブラウザから
要求

CONTENTS SCREEN.
コンテンツ画面

602
コンテンツ

CONTENTS

CLICK

603
クリック

604
ボタン

BUTTON

ACCESS PLACE INFORMATION
連絡先情報

ENCODING WITH USING ENCODE KEY

605
暗号鍵を使
用して暗号化

ENCODED ACCESS PLACE INFORMATION
暗号化された
連絡先情報

606
Java
プログラム

JAVA
PROGRAM

ENDING MESSAGE
終了メッセージ

609
ブラウザ

BROWSER

607
復合

DECODING

608
連絡先登録

REGISTRATION
OF
ACCESS PLACE

22

EP 1 193 617 A1

FIG. 7

EVENT INFORMATION

DATE: FEB. 16 (SUN), 2000 TO FEB 19 (SAT)
10:30 ~ 18:00 (TILL 17:00 ON A)

PLACE: MAKUHARI MESSE

SPONSORED BY: IDG JAPAN, NIHON-KOGYO
NEWSPAPER, MAINICHI
COMMUNICATIONS, MAC FAN,
ETC.

SYSTEM   MODE

104.com を クリック
CLICK 104.COM

23

EP 1 193 617 A1

FIG. 8

24

EP 1 193 617 A1

FIG. 9

DATE: FEB.16 (WED), 2000 TO FEB. 19
(SAT)
10:30~18:00 (17:00 ON 19 (SUN))
PLACE: MAKUHAR MESSE
SPONSORED BY: IDG JAPAN
NIHON KOGYO
NEWSPAPER,)
MAINICHI
COMMUNICATIONS,
MAC FAN, ETC.

MODE

SYSTEM

25

FIG. 10

| | |
|---|---|
| 生成プログラム配布 (1001) | DISTRIBUTION OF GENERATION PROGRAM |
| 必要事項記入 (1002) | ENTERING NECESSARY ITEMS |
| HTMLの自動生成 (1003) | AUTOMATIC GENERATION OF HTML |
| HTMLの貼付 (1004) | PASTING OF HTML |
| ボタン表示 (1005) | DISPLAYING BUTTON |

26

FIG · 11 ·

FIG. 12

HTML

HPへペースト；5

<a href="http://123.456.789.10/cgi/tos/reg_imode_telephone_directory.cgi?
data=a5a4a5c1a5eca5e4a5e8a5f3b3f4bcb0b2f1bcd2-a444c1a4eca4a4a4e8a4f3a4aba4d6a4b6a4b
30332d353830342d30313034-68747470322f2f3139342e6366f6d2f-313233-34353697-c5ecd5fec5d4-c
cbdcb6bf787878><img src="http://123.456.789.10/tos/images/104.gif>XXXへ登録 104.com</a>

FIG.13

9 AM BRANCH MANAGER CONFERANCE
10AM VISIT MR. SATO
2PM VISIT MR. SUZUKI
7PM ALUMNI ASSOCIATION AT IKEBUKORO
✿ KYOJIN-CHUNICHI AT KORAKUEN
△ SMAP CONCERT AT OSAKA

1304

CELLULAR PHONE NET

SERVER OF CELLULAR PHONE BUSINESS

BROWSER

1301

SERVER

1302

PERSONAL SCHEDULE

1303

COMMON SCHEDULE

INTERNET

1305a

1305b

MAY 1ST
△ SMAP CONCERT AT OSAKA

1305c

MAY 1ST
✿ KYOJIN-CHUNICHI AT KORAKUEN

FIG. 14

LAST MONTH · HOW TO USE · TODAY · BACK UP · FIG.14 · MATSUSHIMA · HIROSUE · FUJIWARA · SAKAI · NEXT MONTH

FIG.15

7.本部へ電話
9.カレンダー

■5.23 日 お休み
■5.24 月 西田 有給休
暇

■5.25 火 GG社 藤原様
から連絡あり、西田さん今
日中に連絡して下さい。
松島 13:00 淡路町で打
合せ、帰社18:00予定
■5.26 水
■5.27 木 広末 14:00横
浜RR社打合せ(連絡取れ
ません)
■5.28 金 ★海外ツアー
「みんな行こうよ！」チケッ
ト予約開始

7. CALL TO CENTER

9. CALENDAR

5.23 SUN.  OFF
5.24 MON. NISHIDA  PAID  VACATION

5.25 TUE. CALL FROM MR. FUJIWARA OF GG CO.
MR. NISHIDA PLEASE CALL HIM THIS DAY.
MATSUSHIMA 13:00 MEETING AT AWAJICHO
BACK 18:00
5.26 WED.

5.27 THU. HIROSUE 14:00 MEETING AT
YOKOHAMA RR CO. (NO CONNECTION)

5.28 Fri. ★ ABROAD TOUR

"GO FOR ALL!" BOOKING STARTS.

EP 1 193 617 A1

FIG. 16

1999年5月29日

お休み
△晴れ　29度

送信

1999.5.29
OFF
△ FINE　29℃

SEND

FIG. 17

1999年5月
日 月 火 水 木 金 土
1
2 3 4 5 6 7 8
9 10 11 12 13 14 15
16 17 18 19 20 21 22
23 24 25 26 27 28 29
30 31

| 1.先月 | 3.翌月 |

1999 . MAY
SUN MON TUE WED THU FRI SAT

1. LAST MONTH

2. NEXT MONTH

FIG. 18

```
                                  1801
   ┌─────────────────────┐
   │  バナー生成プログラム起動  │  ACTIVATE BANNER CREATING
   └─────────────────────┘  PROGRAM
              │
              ▼                   1802
   ┌─────────────────────┐
   │      必要事項記入        │  INPUT NECESSARY DATA ITEMS
   └─────────────────────┘
              │
              ▼                   1803
   ┌─────────────────────┐
   │     HTMLの自動生成      │  AUTOMATICALLY CREATE HTML
   └─────────────────────┘  DATA
              │
              ▼                   1804
   ┌─────────────────────┐
   │      HTMLの貼付        │  ATTACH HTML DATA
   └─────────────────────┘
              │
              ▼                   1805
   ┌─────────────────────┐
   │      バナー表示         │  DISPLAY BANNER
   └─────────────────────┘
              │
              ▼                   1806
   ┌─────────────────────┐
   │   バナーへのアクション    │  ACTION TO BANNER
   └─────────────────────┘
```

FIG. 19

検索条件入力  1901  INPUT SEARCH CONDITION

検索  1902  SEARCH

ボタン生成  1903  CREATE BUTTON

検索結果とボタンの同時表示  1904  CONCURRENTLY DISPLAY SEARCH RESULT AND BUTTON

ボタンへのアクション  1905  ACTION TO BUTTON

データ取得  1906  ACQUIRE BUTTON

EP 1 193 617 A1

FIG. 20

TRANSFER INFORMATION

"HONGO-3-CHOME" TO "URAWA"
TIME REQUIRED 37 MINUTES
"HONGO-3-CHOME", MARUNOUCHI-LINE
IKEBUKURO, SAIKYO-LINE, AKABANE,
TOHOKU LINE, "URAWA"

TIME REQUIRED 44 MINUTES
"HONGO-3-CHOME", MARUNOUCHI-LINE,
"OCHANOMIZU", SOBU-LINE, "AKIHABARA",
YAMANOTE-LINE, "UENO", TOHOKU-LINE,
"URAWA".

TIME REQUIRED 43 MINUTES
"HONGO-3-CHOME", MARUNOUCHI-
LINE, "KORAKUEN", NANBOKU LINE,
OJI, TOHOKU-LINE, AKABANE,
TAKASAKI-LINE, URAWA

36

EP 1 193 617 A1

FIG. 21

STATION - HONGO-3-CHOME
STATION - MINAMI-URAWA
STATION - KAIHIN-MAKUHARI
PUMPKIN PUDDING
PUMPKIN SOUP
FRIED SOLE

DETAIL   EDIT
NEW   DELETE
BACK
HOW TO USE
MODE

SYSTEM

37

EP 1 193 617 A1

FIG. 22

STATION - HONGO - 3 - CHOME
"HONGO - 3 - CHOME" TO "URAWA".
TIME REQUIRED 37 MINUTES
"HONGO - 3 - CHOME", MARUNOUCHI-LINE,
"IKEBUKURO," SAIKYO-LINE, "AKABANE",
TOHOKU-LINE, "URAWA"

MODE

SYSTEM

38

FIG. 23

| ユーザーサイト<br>OSER SITE | システム運営サイト<br>SYSTEM MANAGEMENT SITE | ショッピングサイト<br>SHOPPING SITE |
|---|---|---|
| | ISSUE SITE ―― 発行サイト ―2302 | |
| ―2301<br>ブラウザ<br>BROWSER | VERIFICATION SITE ―2303 認証サイト | ―2307 CAR-RELATED<br>車用品サイト SITE |
| | SYSTEM DB システム DB ―2304 | ―2308 FOOD SITE<br>お料理サイト |
| | ORDERING SITE 注文サイト ―2305 | |
| | PERSONAL DB 個人DB ―2306 | |

FIG. 24

SYSTEM MANAGEMENT
SITE
システム運営サイト

SHOPPING
SITE
ショッピングサイト

CREATING
PROGRAM

ISSUE SITE

2403

生成
プログラム

2302

発行サイト

CAR-RELATED
SITE
2307

車用品サイト

2401

REQUEST 要求

2402

ボタン
識別子

BUTTON
IDENTIFIER

2308 FOOD-SITE

お料理サイト

2303

認証サイト

VERIFICATION
SITE

2304

システム
DB

SYSTEM DB

EP 1 193 617 A1

# FIG. 25

USER SITE
ユーザーサイト

SYSTEM MANAGEMENT SITE
システム運営サイト

BROWSER
~2301
ブラウザ

VIEW WWW SITE
WWW閲覧

~2501 SHOPPING SITE
ショッピングサイト

CLICK
クリック

~2502 BUTTON
ボタン

INFORMATION + IDENTIFIER
提供情報＋識別子

VERIFICATION SITE
~2303
認証サイト

~2304 SYSTEM
システム

41

FIG. 26

EP 1 193 617 A1

FIG.27

2701

2702

2705

INGREDIENTS
Id 材料 単価 UNIT PRICE
12 チェリー CHERRIES <A>
16 アイスクリーム ICE CREAM 105
78 チョコレート CHOCOLATE 200
69 卵 EGGS <A>

ORDER
注文 人分
PERSON(S)

2703

iPICK

2704

2706  2707

43

EP 1 193 617 A1

FIG. 28

USER SITE
ユーザーサイト

SYSTEM MANAGEMENT SITE
システム運営サイト

2301 BROWSER
ブラウザ

VIEW WWW SITE
WWW閲覧

BANK SITE
2801
バンクサイト

CLICK
クリック

2802
ボタン
BUTTON

INFORMATION + IDENTIFIER
提供情報+識別子

VERIFICATION SITE
2303
認証サイト

2304
システム DB
SYSTEM DB

2803
バンキング 手段

2304
個人 DB
PERSONAL DB

書き込み
WRITE

BANKING MEANS

44

EP 1 193 617 A1

**INTERNATIONAL SEARCH REPORT**

International application No.

PCT/JP00/03348

A. CLASSIFICATION OF SUBJECT MATTER
Int.Cl⁷ G06F17/30, G06F15/00, G06F17/60, G06F13/00

According to International Patent Classification (IPC) or to both national classification and IPC

B. FIELDS SEARCHED

Minimum documentation searched (classification system followed by classification symbols)
Int.Cl⁷ G06F17/30, G06F15/00, G06F17/60, G06F13/00

Documentation searched other than minimum documentation to the extent that such documents are included in the fields searched
Jitsuyo Shinan Koho          1926-1996     Jitsuyo Shinan Toroku Koho  1996-2000
Kokai Jitsuyo Shinan Koho    1971-2000     Toroku Jitsuyo Shinan Koho  1994-2000

Electronic data base consulted during the international search (name of data base and, where practicable, search terms used)
JICST FILE(JOIS) HOME PAGE, PORTABLE/CELLULAR, BOOK MARK, SERVER, INDIVIDUAL

C. DOCUMENTS CONSIDERED TO BE RELEVANT

| Category* | Citation of document, with indication, where appropriate, of the relevant passages | Relevant to claim No. |
|---|---|---|
| P,Y | JP, 2000-82066, A (Recruit Co., Ltd), 21 March, 2000 (21.03.00), Full text, all drawings, especially abstract, Par. Nos. [0007], [0027], [0033], [0043]; Fig. 5 (Family: none) | 1-56, 63-105 |
| P,Y | JP, 11-203219, A (Info City K.K.), 30 July, 1999 (30.07.99), Full text, all drawings, especially, abstract, Par. Nos. [0002], [0014], [0025], [0037]; Figs.7,9 (Family: none) | 1-56, 63-105 |
| P,Y | JP, 2000-90033, A (NTT Ido Tsushinmo K.K.), 31 March, 2000 (31.03.00), Full text, all drawings, especially, Claims; Par. No. [0031] (Family: none) | 1-56, 63-105 |
| P,Y | JP, 11-259486, A (Toshiba Corporation), 24 September, 1999 (24.09.99), Full text, all drawings, especially, abstract, Par. Nos. [0025] to [0030]; Figs. 5 to 9 (Family: none) | 1-56, 63-105 |

☒ Further documents are listed in the continuation of Box C.   ☐ See patent family annex.

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure. use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
17 August, 2000 (17.08.00)

Date of mailing of the international search report
29 August, 2000 (29.08.00)

Name and mailing address of the ISA/
Japanese Patent Office

Facsimile No.

Authorized officer

Telephone No.

Form PCT/ISA/210 (second sheet) (July 1992)

45

## INTERNATIONAL SEARCH REPORT

International application No.

PCT/JP00/03348

C (Continuation).    DOCUMENTS CONSIDERED TO BE RELEVANT

| Category* | Citation of document, with indication, where appropriate, of the relevant passages | Relevant to claim No. |
|---|---|---|
| P,Y | JP, 11-346235, A (Nippon Telegr. & Teleph. Corp. <NTT>), 14 December, 1999 (14.12.99), Full text, all drawings, especially , Claims; Par. No. [0018]    (Family: none) | 1-56, 63-105 |
| P,Y | JP, 2000-76289, A (Recruit Co., Ltd), 14 March, 2000 (14.03.00), Full text, all drawings, especially abstract (Family: none) | 1-56, 63-105 |
| P,Y | JP, 2000-20434, A (Toshiba Corporation), 21 January, 2000 (21.01.00), Full text, all drawings, especially, Claims, abstract (Family: none) | 1-56, 63-105 |
| Y | Kentaro FUJIMOTO "Portal Site・Business: Internet nimo Shinjidai aratana Model Kouchiku e Shikou Sakugo", *Nikkei PC21*, Vol.4, No.3, Nikkei BP K.K., 01  March, 1999 (01.03.99) pp.172-175 | 1-56, 63-105 |
| A | JP, 10-340178, A (Sony Corporation), 22 December, 1998 (22.12.98), Full text, all drawings, especially Par. Nos.[0044], [0051], [0068], [0083]    (Family: none) | 1-56, 63-105 |

Form PCT/ISA/210 (continuation of second sheet) (July 1992)

# EP 1 193 617 A1

| INTERNATIONAL SEARCH REPORT | International application No. |
|---|---|
| | PCT/JP00/03348 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

    The inventions of claims 1-56, 63-105 relate to the idea of copying information existing on the Internet to a personal database prepared for each user.
    The inventions of claims 57-62 relate to the idea of setting the terminal where an action occurs because of a request of a user as a sharing user of a personal database prepared for each user.
    Therefore, the group of inventions of claims 1-56, 63-105 and the group of inventions of claims 57-62 are not united into one invention nor so linked as to form a single general inventive concept, and hence the international application does not fulfill the requirement of unity of invention.

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:

    Claims 1-56, 63-105

**Remark on Protest**    ☐ The additional search fees were accompanied by the applicant's protest.

    ☐ No protest accompanied the payment of additional search fees.

Form PCT/ISA/210 (continuation of first sheet (1)) (July 1992)

47